# EUROPEAN PATENT APPLICATION

(11) **EP 2 099 030 A1**
(43) Date of publication of application: **09.09.2009**
(21) Application number: 09003125.3
(22) Date of filing: 04.03.2009
(51) Int. Cl.: G11B 7/09

(54) **Plate spring, lens driving apparatus, and method for manufacturing plate spring**

(30) Priority: 05.03.2008 JP 2008054980
(71) Applicant: Mitsumi Electric Co., Ltd., Tama-shi, Tokyo 206-8567 (JP)
(72) Inventor: Kobayashi, Noriyuki, Tama-Shi Tokyo 206-8567 (JP)
(74) Representative: Grünecker, Kinkeldey, Stockmair & Schwanhäusser Anwaltssozietät

(57) **Abstract**

A plate spring is provided. An inner peripheral end is formed into an annular shape. An outer peripheral end is spaced apart from the inner peripheral end and surrounds the inner peripheral end. N arm portions are formed along a circumferential direction of the annular shape so as to connect the inner peripheral end to the outer peripheral end, where N is an integer not less than two. N inner peripheral connection portions are protruded outwardly from the inner peripheral end in a radial direction of the annular shape so as to connect the inner peripheral end to the N arm portions. N outer peripheral connection portions are protruded inwardly from the outer peripheral end in the radial direction so as to connect the outer peripheral end to the N arm portions. The outer peripheral end is formed with M notches so that the outer peripheral end is not formed into an annular shape, where M is a positive integer.

## Description

### BACKGROUND

The present invention relates to a lens driving apparatus, and more particularly, to a structure of a pair of plate springs which is provided on both sides of a cylindrical portion of a lens holder holding a lens assembly (barrel) in an optical axis direction and supports the lens holder so as to be displaceable in an optical axis direction in the state where the lens holder is positioned in a radial direction.

A small-sized portable camera is mounted to a cellular phone equipped with a camera. In the small-sized portable camera, an auto-focus lens driving apparatus is used. In the past, various auto-focus lens driving apparatuses have been proposed.

For example, Patent Document 1 (Figs. 1 to 3) discloses a lens driving apparatus in which an upper plate spring (front spring) and a lower plate spring (rear spring) are vertically (longitudinally) attached to a lens support body (lens holder) in an optical axis direction, and the lens support body (lens holder) is moved in an optical axis direction of a lens assembly (barrel) by means of an electromagnetic force obtained by a current supplied to a driving coil.

The upper plate spring (front spring) and the lower plate spring (rear spring) have the substantially same shape as each other. Accordingly, hereinafter, the upper plate spring (front spring) and the lower plate spring (rear spring) will be generally referred to as a plate spring (spring).

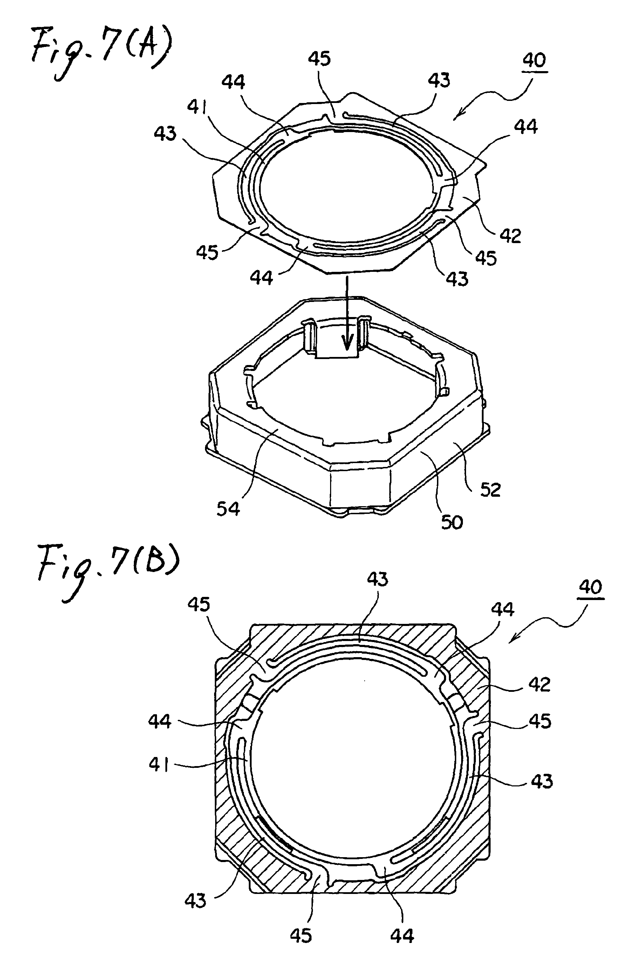

Figs. 7(A) and 7(B) show a related-art upper plate spring (front spring) 40. Fig. 7(A) is an exploded perspective view showing the upper plate spring (front spring) 40 together with a support component (yoke) 50 for supporting the upper plate spring and Fig. 7(B) is a top view showing a position where the upper plate spring (front spring) 40 shown in Fig. 7(A) comes into close contact with the support component 50, the position being depicted by the oblique line.

The related-art upper plate spring (front spring) 40 includes an inner peripheral end (inner ring) 41 which is formed in an annular shape, an outer peripheral end (outer ring) 42 which is spaced from the inner peripheral end (inner ring) 41 and has a larger radius than that of the inner peripheral end (inner ring) 41, and three arm portions 43 which are formed in a circumferential direction so as to connect the inner peripheral end 41 to the outer peripheral end 42. Each arm portion 43 extends in a circumferential direction. An inner peripheral connection portion 44 formed between the inner peripheral end 41 and the arm portions 43 protrudes outward in a radial direction from the inner peripheral end 41. An outer peripheral connection portion 45 formed between the outer peripheral end 42 and the arm portions 43 protrudes inward in a radial direction from the outer peripheral end 42. Each arm portion 43 has the substantially identical width in a circumferential direction.

Meanwhile, the yoke 50 as the support component includes an outer casing portion 52 and a ring-shaped end 54 which is formed in the upper end (front end) of the outer casing portion 52. As shown in Fig. 7(B), the outer peripheral end (outer ring) 42 of the upper plate spring (front spring) 40 comes into close contact with the ring-shaped end 54 of the yoke 50 so as to be fixed thereto by means of an adhesive or a laser welding. On the other hand, the inner peripheral end (inner ring) 41 of the upper plate spring (front spring) 40 is connected to one end of the lens holder (not shown) so as to support the lens holder.

Additionally, although Figs. 7(A) and 7(B) show a case where the outer peripheral end (outer ring) 42 of the upper plate spring (front spring) 40 comes into close contact with the support component 50 so as to be fixed thereto, the same applies to a case where the outer peripheral end (inner ring) of the lower plate spring (rear spring) comes into close contact with the support component so as to be fixed thereto.

Further, Patent Document 2 (Fig. 1) discloses a lens driving apparatus which is excellent in resistance to shake and impact by reducing stresses acting on front and rear springs in various directions.

In the lens driving apparatus disclosed in Patent Document 2, each of the front and rear springs respectively attached to front and rear portions of a lens support body (lens holder) in an optical axis direction is configured as a plate spring formed in an annular shape in a top view. The plate spring includes an inner peripheral end which is formed in an annular shape, an outer peripheral end which is formed in an annular shape having a larger radius than that of the inner peripheral end, and three arm portions which are provided between the inner peripheral end and the outer peripheral end. Each arm portion includes plural peripheral portions which are formed in a circumferential direction so as to have diameters having different radiuses, an inner peripheral connection portion which is connected to the inner peripheral end, and an outer peripheral connection portion which is connected to the outer peripheral end. The ends of the peripheral portions are connected to each other by means of a joining portion formed in a curve shape. Additionally, each connection portion is formed in a curve shape.

Patent Document 3 (Fig. 1) discloses a plate spring (spring) capable of exhibiting a linear deformation characteristic without a variation in drop. The plate spring disclosed in Patent Document 3 includes an inner peripheral ring portion (inner peripheral end), an outer peripheral ring portion (outer peripheral end) which is spaced from the inner peripheral ring portion, and at least one circular-arc arm portion (arm part) which extends up to the inner peripheral ring portion and the outer peripheral ring portion. The inner peripheral ring portion and the outer peripheral ring portion elastically expand and contract in a normal direction of a plate surface by means of the circular-arc arm portion. At least one of the inner peripheral ring portion and the outer peripheral ring portion is provided with an arm inner peripheral support portion which supports the circular-arc arm portion and is elastically deformed by an external force occurring in a direction perpendicular to the normal direction of the plate surface so as to deform the circular-arc arm portion in the direction where the external force occurs.

Patent Document 4 (Figs. 2 and 3) discloses a lens driving apparatus capable of suppressing an optical axis misalignment by softening bending moment acting on a plate spring used to elastically support a lens holder holding a lens so as to prevent a plastic deformation of the plate spring.

The plate spring disclosed in Patent Document 4 includes an outer peripheral fixed ring portion which is fixed to a fixed member, an inner peripheral fixed ring portion which is fixed to the holder, an outer protrusion piece which protrudes inward in a radial direction from the outer peripheral fixed ring portion, an inner protrusion piece which protrudes outward in a radial direction from the inner peripheral fixed ring portion, and a connection piece (arm portion) which connects the outer protrusion piece to the inner protrusion piece. The connection piece (arm portion) extends in a circumferential direction, and has a substantially identical width. At least a part of the connection piece is subjected to a bending process in a thickness direction.
Patent Document 1: Japanese Patent No. 3950103
Patent Document 2: Japanese Patent Publication No. 2006-201525A
Patent Document 3: Japanese Patent Publication No. 2005-258355A
Patent Document 4: Japanese Patent Publication No. 2007-072272A

As disclosed in Patent Document 1, in the related-art plate spring (spring) 40 shown in Figs. 7(A) and 7(B), the outer peripheral end 42 of the plate spring (spring) 40 comes into close contact with the ring-shaped end 54 of the support component 50 so as to be fixed thereto. At this time, a deformation occurs in the plate spring (spring) 40. This is because it is difficult to form a support surface of the ring-shaped end 54 into a plane upon manufacturing the support component 50, and hence the support surface of the ring-shaped end 54 is slightly deformed. In addition, the deformation on the support surface is also generated when the plate spring 40 is welded to the support surface of the ring-shaped end 54. However, the outer peripheral end 42 cannot escaped from the deformed portion on the support surface since the outer peripheral end 42 is formed into an annular shape. As a result, in the related-art plate spring (spring) 40, a deformation occurs in the arm portion 43 having a narrow plate width. The deformation of the arm portion 43 causes an inclination of the lens holder supported (fixed) by the inner peripheral end 41 of the plate spring (spring) 40.

Since the plate spring (spring) disclosed in Patent Documents 2 to 4 has the outer peripheral end formed into an annular shape, the plate spring (spring) has the same problem as that of the related-art plate spring (spring) 40 shown in Figs. 7(A) and 7(B). Fig. 6 of Patent Document 3 discloses a plate spring consist of two separated members. In this case, it is necessary to attach these two members to the lens driving apparatus independently. Thus, an assembling process of the lens driving apparatus gets complex.

### SUMMARY

It is therefore an object of the present invention to provide a lens driving apparatus and a plate spring capable of supporting the lens holder without an inclination.

The other objects of the invention will be apparent according to the following description.

In order to achieve the object, according to a first aspect of at least one embodiment of the present invention, there is provided a plate spring comprising: an inner peripheral end formed into an annular shape; an outer peripheral end spaced apart from the inner peripheral end and surrounding the inner peripheral end; N arm portions formed along a circumferential direction of the annular shape so as to connect the inner peripheral end to the outer peripheral end, where N is an integer not less than two; N inner peripheral connection portions protruded outwardly from the inner peripheral end in a radial direction of the annular shape so as to connect the inner peripheral end to the N arm portions; and N outer peripheral connection portions protruded inwardly from the outer peripheral end in the radial direction so as to connect the outer peripheral end to the N arm portions, wherein the outer peripheral end is formed with M notches so that the outer peripheral end is not formed into an annular shape, where M is a positive integer.

The N may be equal to three and the M may be equal to one or three.

According to a second aspect of at least one embodiment of the present invention, there is provided a lens driving apparatus comprising: a lens holder having a cylindrical portion adapted to hold a lens assembly; a driving coil fixed to the lens holder so as to be positioned in a circumference of the cylindrical portion; a yoke having a permanent magnet opposed to the driving coil; and an upper plate spring and a lower plate spring provided on both sides of the cylindrical portion of the lens holder in an optical axis direction of the cylindrical portion and movably supporting the lens holder in the optical axis direction in a state where the lens holder is positioned in a radial direction of the cylindrical portion, wherein the upper plate spring is configured as the above plate spring, and wherein the inner peripheral end of each of the upper plate spring and the lower plate spring is attached to the lens holder and the outer peripheral end of each of the upper plate spring and the lower plate spring is attached to the yoke.

The lower plate spring may be configured as the above plate spring.

According to a third aspect of at least one embodiment of the present invention, there is provided a method for manufacturing the above plate spring, the method comprising: preparing a flat plate; processing the flat plate to obtain a temporary plate spring having the outer peripheral end with a connection portion bridging a position where one of the notches is formed so that the outer peripheral end is formed into the annular shape; cutting out the connection portion from the outer peripheral end of the temporary plate spring to obtain the plate spring.

The processing may include an etching process. The processing may include a pressing process. The flat plate may be processed so that the thickness of both ends of the connection portion is smaller than the thickness of the other portion of the outer peripheral end. The processing may include a half etching process so that the thickness of both ends of the connection portion is smaller than the thickness of the other portion of the outer peripheral end.

According to the invention, it is possible to prevent a deformation occurring when the outer peripheral end of the plate spring comes into close contact with the support component so as to be fixed thereto. As a result, it is possible to support the lens holder without an inclination.

### BRIEF DESCRIPTION OF THE DRAWINGS

The above and other aspects of the present invention will become more apparent by describing in detail exemplary embodiments thereof with reference to the accompanying drawings, wherein:
Fig. 1 is an external perspective view showing a lens driving apparatus according to a first embodiment of the invention;
Fig. 2 is an exploded perspective view showing the lens driving apparatus shown in Fig. 1;
Fig. 3 is an exploded perspective view showing a plate spring used for the lens driving apparatus shown in Fig. 2 together with a yoke as a support component;
Figs. 4(A) to 4(C) are top views showing a method for manufacturing the plate spring shown in Fig. 3;
Fig. 5 is a top view showing a plate spring 22A according to a second embodiment of the invention;
Fig. 6 is a top view showing a plate spring 22A according to a third embodiment of the invention;
Fig. 7(A) is an exploded perspective view showing a related-art upper plate spring together with a support component (yoke) for supporting the upper plate spring; and
Fig. 7(B) is a top view showing a position where the related-art upper plate spring comes into close contact with the support component, the position being depicted by the oblique line.

### DETAILED DESCRIPTION OF EXEMPLARY EMBODIMENTS

Hereinafter, an exemplary embodiment of the invention will be described with reference to the accompanying drawings.

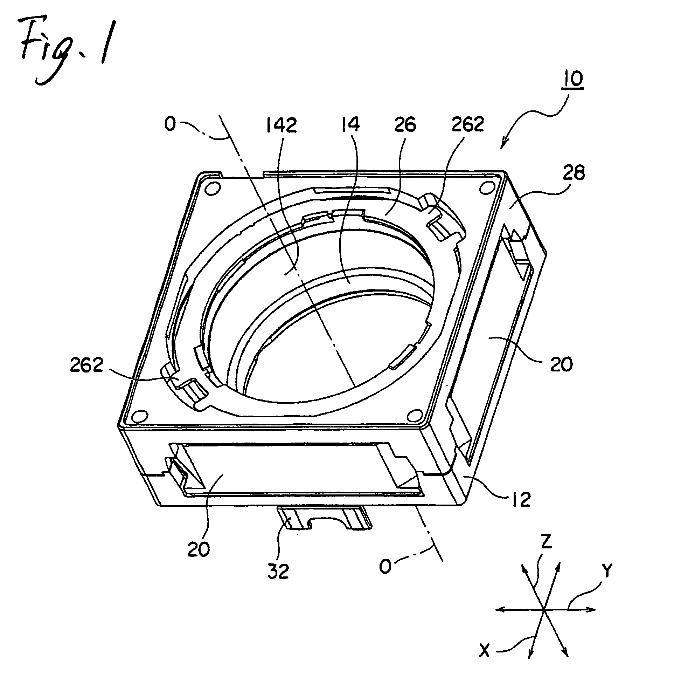

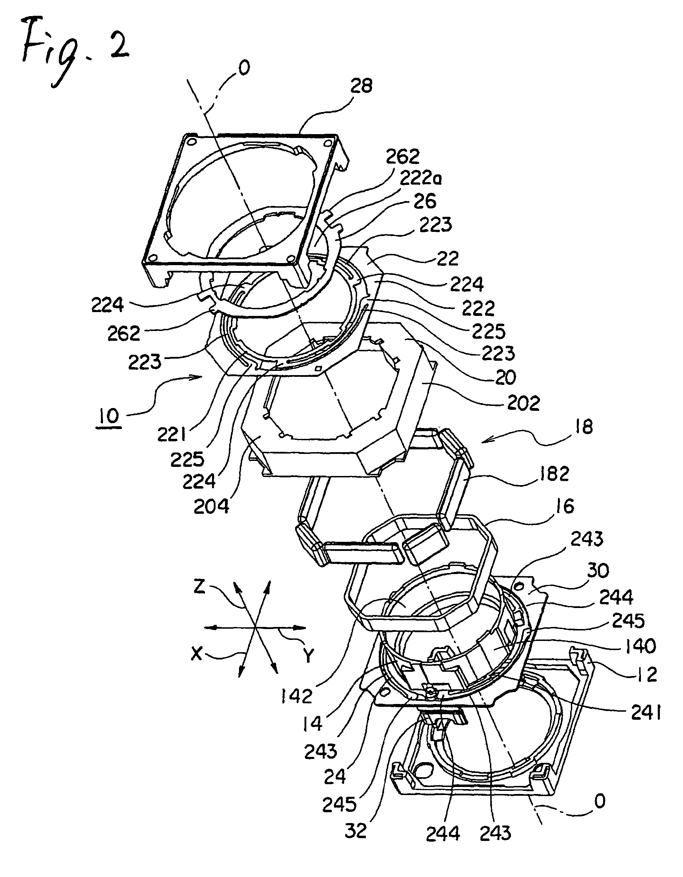

A lens driving apparatus 10 according to the embodiment of the invention will be described with reference to Figs. 1 and 2. Fig. 1 is an external perspective view showing the lens driving apparatus 10. Fig. 2 is an exploded perspective view showing the lens driving apparatus 10. Here, as shown in Figs. 1 and 2, an orthogonal coordinate system (X, Y, and Z) are used. In the orthogonal coordinate system (X, Y, and Z) shown in Figs. 1 and 2, the X axis indicates a longitudinal direction (depth direction), the Y axis indicates a traverse direction (width direction), and the Z axis indicates a vertical direction (height direction). Then, in the examples shown in Figs. 1 to 3, the vertical direction Z corresponds to a direction of an optical axis O of the lens.

However, at an actual use time, the longitudinal direction corresponds to the direction of the optical axis O, that is, the vertical direction Z. In other words, an upward direction of the Z axis corresponds to a forward direction, and a downward direction of the Z axis corresponds to a backward direction.

The lens driving apparatus 10 shown in the drawings is provided in a cellular phone equipped with an auto-focus camera. The lens driving apparatus 10 is used to move a lens assembly (barrel) (not shown) in the direction of the optical axis O. The lens driving apparatus 10 includes an actuator base 12 disposed in the lower side of (in rear of) the Z-axis direction (the direction of the optical axis O). A lower portion (rear portion) of the actuator base 12 is provided with an imaging element (not shown) disposed on a substrate. The imaging element picks up a subject image formed by the lens assembly and converts the pick-up image into an electrical signal. The imaging element is formed by, for example, a CCD (charge coupled device) type image sensor, a CMOS (complementary metal oxide semiconductor) type image sensor, or the like. Accordingly, a camera module is formed by the combination of the lens driving apparatus 10, the substrate, and the imaging element.

The lens driving apparatus 10 includes a lens holder 14 which includes a cylindrical portion 140 for holding the lens assembly (barrel), a driving coil 16 which is fixed to the lens holder 14 so as to be positioned in the vicinity of the cylindrical portion 140, a yoke 20 which includes a permanent magnet 18 opposed to the driving coil 16, and a pair of plate springs 22 and 24 provided on both sides of the cylindrical portion 140 of the lens holder 14 in the direction of the optical axis O. The pair of plate springs 22 and 24 supports the lens holder 14 so as to be displaceable in the direction of the optical axis O in the state where the lens holder 14 is positioned in a radial direction. Among the pair of plate springs 22 and 24, one plate spring 22 is called as an upper plate spring, and the other plate spring 24 is called as a lower plate spring.

Additionally, as described above, at an actual use time, the upward direction of the Z axis (the direction of the optical axis O) corresponds to the forward direction and the downward direction of the Z axis (the direction of the optical axis O) corresponds to the backward direction. Accordingly, the upper plate spring 22 is called as a front spring, and the lower plate spring 24 is called as a rear spring. Each of the upper plate spring 22 and the lower plate spring 24 has a thickness of 30-60 micrometers.

As shown in Fig. 2, the yoke 20 is formed in an octagonal cylindrical shape. That is, the yoke 20 includes an octagonal cylindrical outer casing portion 202 and an octagonal ring-shaped end 204 provided on the upper end (front end) of the outer casing portion 202. Accordingly, the driving coil 16 is formed in an octagonal cylindrical shape in accordance with the shape of the octagonal cylindrical yoke 20. The permanent magnet 18 is formed by eight rectangular permanent magnet pieces 182 disposed on each side member of the octagonal cylindrical outer casing portion 202 of the yoke 20.

As shown in Fig. 2, the permanent magnet 18 is disposed on the inner peripheral surface of the outer casing portion 202 of the yoke 20 so as to have a gap with respect to the driving coil 16.

The upper plate spring (front spring) 22 is disposed on the upper side (front side) of the lens holder 14 in the direction of the optical axis O, and the lower plate spring (rear spring) 24 is disposed on the lower side (rear side) of the lens holder 14 in the direction of the optical axis O. The upper plate spring (front spring) 22 and the lower plate spring (rear spring) 24 have the substantially same configuration as each other.

The upper plate spring (front spring) 22 includes an inner peripheral end 221 attached to the lens holder 14, an outer peripheral end 222 attached to the yoke 20, and three arm portions 223 formed in a circumferential direction so as to connect the inner peripheral end 221 and the outer peripheral end 222. The inner peripheral end 221 is formed in an annular shape. The outer peripheral end 222 is formed to be spaced from the inner peripheral end 221 and to have a larger radius than that of the inner peripheral end 221. Each arm portion 223 extends in a circumferential direction. An inner peripheral connection portion 224 connecting the inner peripheral end 221 to each arm portion 223 protrudes outward in a radial direction from the inner peripheral end 221. An outer peripheral connection portion 225 connecting the outer peripheral end 222 to each arm portion 223 protrudes inward in a radial direction from the outer peripheral end 222.

In the same manner, the lower plate spring (rear spring) 24 includes an inner peripheral end 241 attached to the lens holder 14, an outer peripheral end (not shown) attached to the yoke 20, and three arm portions 243 formed in a circumferential direction so as to connect the inner peripheral end 241 to the outer peripheral end. The inner peripheral end 241 is formed in an annular shape. The outer peripheral end is formed to be spaced from the inner peripheral end 241 and to have a larger radius than that of the inner peripheral end 241. Each arm portion 243 extends in a circumferential direction. An inner peripheral connection portion 244 connecting the inner peripheral end 241 to each arm portion 243 protrudes outward in a radial direction from the inner peripheral end 241. An outer peripheral connection portion 245 connecting the outer peripheral end to each arm portion 243 protrudes inward in a radial direction from the outer peripheral end.

The inner peripheral end 221 of the upper plate spring (front spring) 22 is sandwiched between the lens holder 14 and a stopper 26 so as to be fixed therebetween. In other words, the stopper 26 is fitted to the lens holder 14 so that the inner peripheral end 221 of the upper plate spring (front spring) 22 is sandwiched between the lens holder 14 and the stopper 26. On the other hand, the outer peripheral end 222 of the upper plate spring (front spring) 22 is sandwiched between the yoke 20 and a cover 28 so as to be fixed therebetween.

The stopper 26 has functions described below. That is, the stopper 26 has a function of allowing the inner peripheral end 221 of the upper plate spring (front spring) 22 to be high-precisely adhered to the lens holder 14 without a deviation. Accordingly, it is possible to improve a deviation of a VCM (voice coil motor) characteristic. Also, the stopper 26 has a function of improving an adhering strength of the upper plate spring (front spring) 22. Accordingly, it is possible to improve an impact resistance of the lens driving apparatus 10. Also, the stopper 26 has a function of preventing a deformation of the upper plate spring (front spring) 22 when a drop impact occurs in the lens driving apparatus 10. Accordingly, it is possible to also improve the impact resistance of the lens driving apparatus 10. Also, the stopper 26 has a function of determining a mechanical stroke of the lens driving apparatus 10.

Additionally, as described below, in this embodiment, the stopper 26 has a function of preventing a rotation of the lens holder 14.

On the other hand, the outer peripheral end of the lower plate spring (rear spring) 24 is fixed to the yoke 20 via a spacer 30. In other words, the spacer 30 and the outer peripheral end of the lower plate spring (rear spring) 24 are sandwiched between the yoke 20 and the actuator base 12 so as to be fixed therebetween. The inner peripheral end 241 of the lower plate spring (rear spring) 24 is fixed to a position on the side of the lower end (rear end) of the lens holder 14.

An inner peripheral wall of the cylindrical portion 140 of the lens holder 14 is provided with a female screw 142. On the other hand, although it is not shown in the drawings, an outer peripheral wall of the lens assembly (barrel) is provided with a male screw threaded into the female screw 142. Accordingly, it is possible to mount the lens assembly (barrel) to the lens holder 14 in such a manner that the lens assembly (barrel) is threaded into the cylindrical portion 140 of the lens holder 14 in the direction of the optical axis O while being rotated about the optical axis O, the lens assembly (barrel) is accommodated in the lens holder 14, and then the lens assembly and the lens holder 14 are adhered to each other by means of an adhesive or the like.

At this time, the lens holder 14 may be rotated together, but in this invention, as described below, the lens holder 14 is completely prevented from being rotated.

When a current is supplied to the driving coil 16 so as to cause an interaction between a magnetic field of the permanent magnet 18 and a magnetic field formed by the current flowing through the driving coil 16, an electromagnetic force is generated. Therefore, it is possible to adjust a position of the lens holder 14 (lens assembly) in the direction of the optical axis O.

A sheet-shaped electrode 32 is disposed between the lower plate spring (rear spring) 24 and the actuator base 12. The sheet-shaped electrode 32 is used to supply a power to the driving coil 16.

As shown in the above-described embodiment, the stopper 26 includes two U-shaped rotation preventing-restraining portions 262 which are provided at symmetric positions corresponding to a rotation of two times by 180° with respect to the optical axis O. The U-shaped rotation preventing-restraining portions 262 are used as rotation preventing members for completely preventing the lens holder 14 from being rotated upon mounting the lens assembly to the cylindrical portion 140 of the lens holder 14. That is, upon mounting the lens assembly to the cylindrical portion 140 of the lens holder 14, it is possible to completely prevent the lens holder 14 from being rotated in such a manner that a jig (not shown) is inserted to the two U-shaped rotation preventing-restraining portions 262 to be held therein. At this time, a clearance between the stopper 26 and the cover 28 is ensured (maintained).

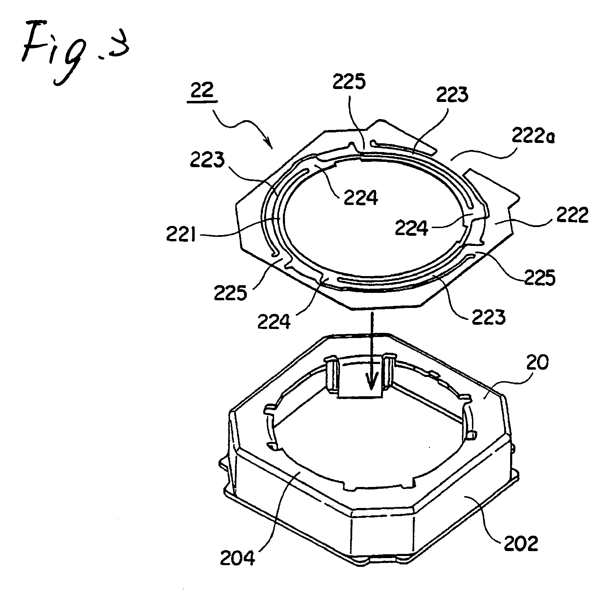

Next, the outer peripheral end 222 forming the upper plate spring (front spring) 22 will be described in detail with reference to Fig. 3. Fig. 3 is an exploded perspective view showing the upper plate spring (front spring) 22 together with the yoke 20 as a support component. Additionally, the outer peripheral end forming the lower plate spring (rear spring) 24 has the same configuration as that of the outer peripheral end 222.

As shown in Fig. 3, the outer peripheral end 222 has a notch 222a formed at one position thereof. That is, the outer peripheral end 222 is formed in a shape different from the annular shape.

In the upper plate spring (front spring) 22 with such a structure, the outer peripheral end 222 comes into close contact with the ring-shaped end 204 of the yoke 20 as the support component so as to be fixed thereto by means of an adhesive or a laser welding. At this time, if the support surface of the ring-shaped end 204 is deformed, a deformation may occur in the outer peripheral end 222. However, since the notch 222a is formed in the outer peripheral end 222, it is possible to prevent the deformation.

As a result, it is possible to suppress an inclination of the lens holder 14 supported (fixed) by the inner peripheral end 221 of the upper plate spring (front spring) 22. Since the inclination of the lens assembly held by the lens holder 14 becomes stable, it is possible to stabilize an image quality of the pick-up image of the imaging element.

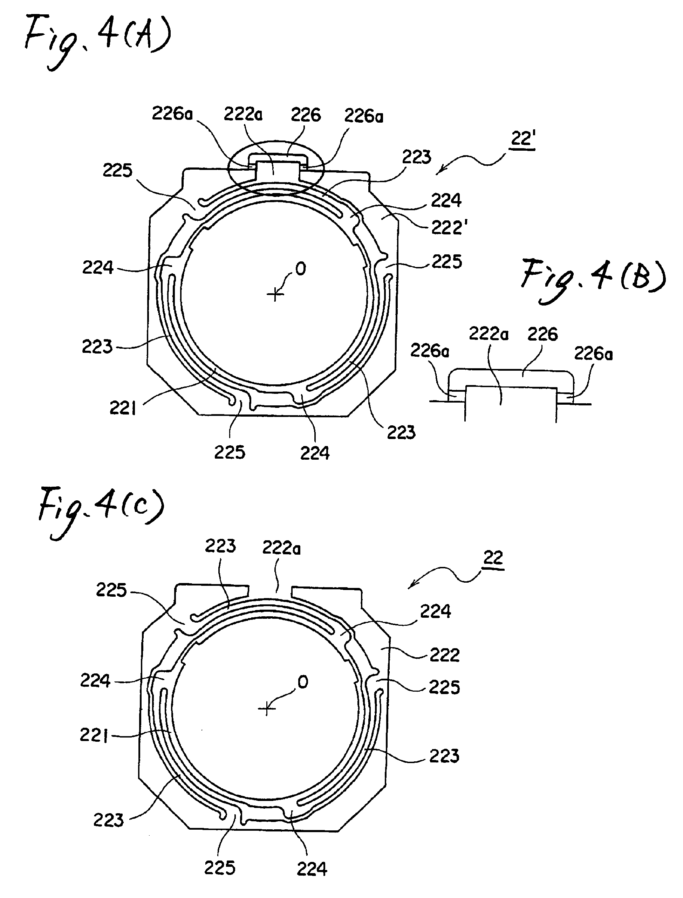

Next, a method for manufacturing the plate spring (spring) 22 shown in Fig. 3 will be described with reference to Figs. 4(A) to 4(C).

When an etching process or a pressing process is performed to a flat plate (not shown) in order to manufacture the plate spring (spring) 22 shown in Fig. 3, it is difficult to directly process (form) the notch 222a. This is because the outer peripheral end 222 may be deformed under its own weight when the notch 222a is formed.

Thus, when the etching process or the pressing process is performed to the flat plate, a temporary (first-processed) plate spring 22' is manufactured as shown in Fig. 4(A). The temporary plate spring 22' includes a connection portion (bridging portion) 226 bypassing (bridging) a position where the notch 222a is to be formed. That is, an outer peripheral end 222' is formed in an annular shape.

Fig. 4(B) is a partially enlarged view showing a part (surrounded by an oval shown in Fig. 4(A)) magnifying the connection portion (bridging portion) 226. Both ends 226a of the connection portion (bridging portion) 226 has a plate thickness smaller than other portions in terms of a half etching process or the like. That is, it is possible to easily cut out the connection portion (bridging portion) 226 from the outer peripheral end 222' in terms of a bending process.

Accordingly, upon (before) fixing the plate spring to a component (yoke) 20 supporting the plate spring, as shown in Fig. 4(C), the plate spring (spring) 22 is obtained (manufactured) by cutting out the connection portion (bridging portion) 226 from the plate spring 22'. Then, the outer peripheral end 222 of the plate spring 22 comes into close contact with the ring-shaped end 204 of the yoke 20 as the support component so as to be fixed thereto by means of an adhesive or a laser welding.

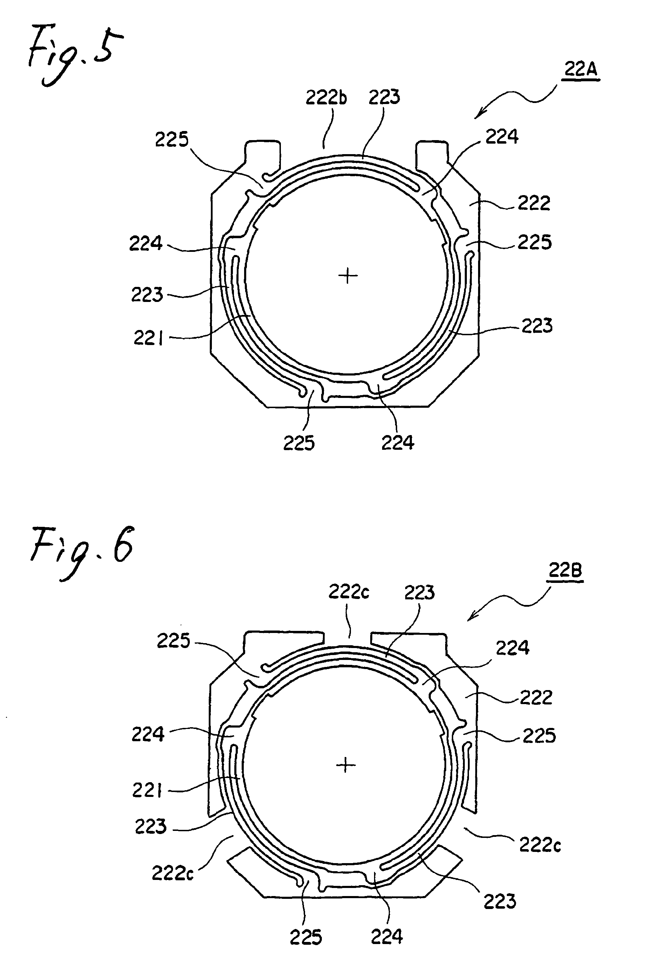

Fig. 5 is a top view showing a plate spring 22A according to a second embodiment of the invention. The plate spring 22A shown in the drawing has the same configuration as that of the plate spring 22 shown in Fig. 3 except that the size of the notch formed in the outer peripheral end 222 is different from that shown in Fig. 3. Accordingly, the reference numeral 222b is given to the notch.

The size of the notch 222b shown in Fig. 5 is larger than that of the notch 222a shown in Fig. 3. Accordingly, it is possible to efficiently use the empty space of the notch 222b. For example, it is possible to dispose a component formed in the cover 28 in the empty space.

Additionally, it is possible to manufacture the plate spring 22A shown in Fig. 5 according to the same manufacture method shown in Figs. 4(A) to 4(C).

Fig. 6 is a top view showing a plate spring 22B according to a third embodiment of the invention. The plate spring 22B shown in the drawing has the same configuration as that of the plate spring 22 shown in Fig. 3 except that the number of notches formed in the outer peripheral end 222 is different from that shown in Fig. 3. Accordingly, the reference numeral 222c is given to the notch.

In the plate spring 22B shown in Fig. 6, the notch 222c is formed at three positions of the outer peripheral end 222. Accordingly, it is possible to efficiently use the empty space of the notch 222c.

It is possible to manufacture the plate spring 22B shown in Fig. 6 according to the same manufacture method shown in Figs. 4(A) to 4(C).

As described above, the exemplary embodiments of the invention is described, but may be, of course, modified into various forms by the person skilled in the art without departing from the spirit of the invention. For example, in the above-described embodiments, three arm portions 223 are used to connect the inner peripheral end 221 to the outer peripheral end 222. However, in general, the invention may be applied to the plate spring in which N number (N is an integer not less than two) of arm portions are used to connect the inner peripheral end 221 to the outer peripheral end 222. Further, in the above-described embodiments, the number of notches formed in the outer peripheral end is one or three. However, in general, the number of notches may be arbitrary M (M is a positive integer). Furthermore, in the lens driving apparatus according to the above-described embodiments, both of the upper plate spring 22 and the lower plate spring 24 are used as the plate spring having a characteristic according to the invention. However, at least one of the upper plate spring 22 and the lower plate spring 24 may be used as the plate spring having a characteristic according to the invention.

## Claims

1. A plate spring comprising:
an inner peripheral end formed into an annular shape;
an outer peripheral end spaced apart from the inner peripheral end and surrounding the inner peripheral end;
N arm portions formed along a circumferential direction of the annular shape so as to connect the inner peripheral end to the outer peripheral end, where N is an integer not less than two;
N inner peripheral connection portions protruded outwardly from the inner peripheral end in a radial direction of the annular shape so as to connect the inner peripheral end to the N arm portions; and
N outer peripheral connection portions protruded inwardly from the outer peripheral end in the radial direction so as to connect the outer peripheral end to the N arm portions,
wherein the outer peripheral end is formed with M notches so that the outer peripheral end is not formed into an annular shape, where M is a positive integer.

2. The plate spring as set forth in claim 1, wherein the N is equal to three and the M is equal to one.

3. The plate spring as set forth in claim 1, wherein the N is equal to three and the M is equal to three.

4. A lens driving apparatus comprising:
a lens holder having a cylindrical portion adapted to hold a lens assembly;
a driving coil fixed to the lens holder so as to be positioned in a circumference of the cylindrical portion;
a yoke having a permanent magnet opposed to the driving coil; and
an upper plate spring and a lower plate spring provided on both sides of the cylindrical portion of the lens holder in an optical axis direction of the cylindrical portion and movably supporting the lens holder in the optical axis direction in a state where the lens holder is positioned in a radial direction of the cylindrical portion,
wherein the upper plate spring is configured as the plate spring as set forth in any one of claims 1 to 3, and
wherein the inner peripheral end of each of the upper plate spring and the lower plate spring is attached to the lens holder and the outer peripheral end of each of the upper plate spring and the lower plate spring is attached to the yoke.

5. The lens driving apparatus as set forth in claim 4, wherein the lower plate spring is configured as the plate spring as set forth in any one of claims 1 to 3.

6. A method for manufacturing the plate spring as set forth in any one of claims 1 to 3, the method comprising:
preparing a flat plate;
processing the flat plate to obtain a temporary plate spring having the outer peripheral end with a connection portion bridging a position where one of the notches is formed so that the outer peripheral end is formed into the annular shape; and
cutting out the connection portion from the outer peripheral end of the temporary plate spring to obtain the plate spring.

7. The method as set forth in claim 6, wherein the processing includes an etching process.

8. The method as set forth in claim 6, wherein the processing includes a pressing process.

9. The method as set forth in claim 6, wherein the flat plate is processed so that the thickness of both ends of the connection portion is smaller than the thickness of the other portion of the outer peripheral end.

10. The method as set forth in claim 9, wherein the processing includes a half etching process so that the thickness of both ends of the connection portion is smaller than the thickness of the other portion of the outer peripheral end.
